(19) Europäisches Patentamt
European Patent Office
Office européen des brevets

(11) **EP 2 502 029 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(21) Anmeldenummer: **10778666.7**

(22) Anmeldetag: **18.11.2010**

(51) Int Cl.:
***G01D 5/244*** *(2006.01)*

(86) Internationale Anmeldenummer:
**PCT/EP2010/067779**

(87) Internationale Veröffentlichungsnummer:
**WO 2011/061269 (26.05.2011 Gazette 2011/21)**

(54) **VERFAHREN, VORRICHTUNG UND SYSTEM ZUM ÜBERWACHEN DES BESTIMMENS EINES ROTORWINKELS EINER ROTIERENDEN WELLE MITTELS EINES RESOLVERS**

METHOD, DEVICE AND SYSTEM FOR MONITORING THE FUNCTION OF A RESOLVER

PROCÉDÉ, DISPOSITIF ET SYSTÈME POUR SURVEILLER LA FONCTION D'UN RÉSOLVEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2009 DE 102009046925**

(43) Veröffentlichungstag der Anmeldung:
**26.09.2012 Patentblatt 2012/39**

(73) Patentinhaber: **Lenze Automation GmbH
31855 Aerzen (DE)**

(72) Erfinder:
• **PASTERNACK, Axel
38226 Salzgitter (DE)**

• **TIESTE, Karl-Dieter
38304 Wolfenbüttel (DE)**
• **DÜRKOP, Henning
38110 Braunschweig (DE)**

(74) Vertreter: **Patentanwälte
Ruff, Wilhelm, Beier, Dauster & Partner mbB
Kronenstraße 30
70174 Stuttgart (DE)**

(56) Entgegenhaltungen:
**EP-A2- 2 078 933      DE-A1- 3 834 384
JP-A- 2007 163 287**

**Beschreibung**

Die Erfindung betrifft ein Verfahren und eine Vorrichtung zum Überwachen des Bestimmens eines Rotorwinkels einer rotierenden Welle mittels eines Resolvers sowie ein System.

Bei Maschinen, die mittels elektrischer Antriebe bewegt werden, dient häufig ein so genannter Resolver zum Bestimmen von Maschinenbewegungen, indem der Resolver einen Rotorwinkel bzw. eine Rotorwinkeländerung einer mit einem Elektromotor gekoppelten rotierenden Welle erfasst, wodurch eine Position eines Maschinenelements bestimmbar ist, welches mittels des elektrischen Antriebs bzw. der Welle bewegt wird.

Resolver sind kostengünstige, magnetisch arbeitende Geber. Sie nutzen die winkelabhängige Kopplung zwischen mindestens einer Rotorwicklung und mindestens zwei Statorwicklungen aus. Typischerweise umfasst ein Resolver eine erste Statorwicklung, eine zweite Statorwicklung, deren Wicklungsachse zur Wicklungsachse der ersten Statorwicklung in einem rechten Winkel steht, und eine Rotorwicklung, die mit der rotierenden Welle drehfest verbunden ist. Die beiden Statorwicklungen sind üblicherweise in einem Gehäuse eines Gebers fest angeordnet. Resolver liefern innerhalb einer doppelten Polteilung unmittelbar den Rotorwinkel. Aus der Winkeländerung ist die Drehzahl ermittelbar. Im Übrigen sei auch auf die einschlägige Fachliteratur verwiesen.

Bei sicherheitskritischen Anwendungen ist eine Diagnostizierbarkeit des verwendeten Gebersystems erforderlich. Um einen kostengünstigen Resolver als Geber bei sicherheitskritischen Anwendungen verwenden zu können, ist es daher notwendig, dass neben der Bestimmung des Rotorwinkels mittels des Resolvers eine Plausibilisierung bzw. Überwachung der Resolverfunktion erfolgt, um beispielsweise Fehlfunktionen bzw. Defekte des Resolvers erkennen zu können und für diesen Fall eine Abschaltung des elektrischen Antriebs zu bewirken.

Die JP 2007-163287 A zeigt eine Vorrichtung und ein Verfahren zur Diagnose von Fehlern eines Resolvers.

Die EP 2 078 933 A2 zeigt ebenfalls einen Resolver mit Fehlererkennung.

Der Erfindung liegt die Aufgabe zugrunde, ein Verfahren und eine Vorrichtung zum Überwachen des Bestimmens eines Rotorwinkels einer rotierenden Welle mittels eines Resolvers sowie ein System zur Verfügung zu stellen, die eine zuverlässige und kostengünstig implementierbare Überwachung ermöglichen und insbesondere leicht in herkömmliche Systeme zur Winkelbestimmung mit Resolver integrierbar sind.

Die Erfindung löst diese Aufgabe durch ein Verfahren nach Anspruch 1, eine Vorrichtung nach Anspruch 7 und ein System nach Anspruch 8. Bevorzugte Ausführungsformen sind Gegenstand der Unteransprüche, deren Wortlaut hiermit durch Bezugnahme zum Inhalt der Beschreibung gemacht wird.

Bei dem Verfahren zum Überwachen des Bestimmens eines Rotorwinkels einer rotierenden Welle mittels eines Resolvers umfasst der Resolver eine erste Statorwicklung, mindestens eine zweite Statorwicklung, deren Wicklungsachse zur Wicklungsachse der ersten Statorwicklung um einen vorbestimmten Winkel, insbesondere um 90°, gedreht ist, und mindestens eine Rotorwicklung, die mit der rotierenden Welle drehfest verbunden ist. Zum Bestimmen des Rotorwinkels werden folgende Schritte durchgeführt: Beaufschlagen der ersten Statorwicklung mit einer ersten, insbesondere sinusförmigen, Erregerwechselspannung mit einer Erregerfrequenz und einer ersten rotorwinkelabhängigen Amplitude, Beaufschlagen der mindestens einen zweiten Statorwicklung mit einer zweiten, insbesondere sinusförmigen, Erregerwechselspannung mit der Erregerfrequenz und einer zweiten rotorwinkelabhängigen Amplitude, und Erzeugen der ersten Amplitude und der zweiten Amplitude mittels eines Reglers derart, dass in der mindestens einen Rotorwicklung aufgrund der ersten und der zweiten Erregerwechselspannung in einem stationären Zustand keine Spannung induziert wird, wobei eine Stellgröße des Reglers den Rotorwinkel abbildet. Das aufgrund der Erregersignale erzeugte magnetische Wechselfeld steht im stationären Zustand senkrecht zu einer Achse der Rotorwicklung. Ein derartiges Verfahren ist in der Offenlegungsschrift DE 38 34 384 A1 beschrieben, die insoweit durch Bezugnahme zum Gegenstand der Beschreibung gemacht wird, um unnötige Wiederholungen zu vermeiden. Zum Überwachen des Bestimmens des Rotorwinkels werden folgende Schritte durchgeführt: Beaufschlagen der ersten Statorwicklung mit einer ersten, insbesondere sinusförmigen, Testwechselspannung mit einer Testfrequenz, die sich von der Erregerfrequenz unterscheidet, und Beaufschlagen der mindestens einen zweiten Statorwicklung mit einer zweiten, insbesondere sinusförmigen, Testwechselspannung mit der Testfrequenz, wobei die erste und die zweite Testwechselspannung bzw. deren Amplituden derart rotorwinkelabhängig, d.h. in Abhängigkeit von der Stellgröße des Reglers, die den Rotorwinkel abbildet, erzeugt werden, dass in der mindestens einen Rotorwicklung aufgrund der ersten und der zweiten Testwechselspannung dauerhaft eine Wechselspannung induziert wird. Es versteht sich, dass die Erregerwechselspannungen und/oder die Testwechselspannungen auch durch entsprechende Erregerwechselströme bzw. Testwechselströme ersetzbar sind. Die in der mindestens einen Rotorwicklung aufgrund der ersten und der zweiten Testwechselspannung induzierte Wechselspannung kann zur Plausibilisierung/Überwachung der Resolverfunktion verwendet werden.

Die erste und die zweite Testwechselspannung, insbesondere deren Amplituden, werden in Abhängigkeit von dem Rotorwinkel derart erzeugt, dass ein aufgrund der ersten und der zweiten Testwechselspannung erzeugtes magnetisches Wechselfeld im Wesentlichen parallel zur Wicklungsachse der Rotorwicklung verläuft.

In einer Weiterbildung ist die Testfrequenz darstellbar als $ft = k * fe$, wobei ft die Testfrequenz bezeichnet, fe die Erregerfrequenz bezeichnet und k eine rationale Zahl größer als Null ist. Bevorzugt ist k=2, d.h. die Testfrequenz ist doppelt so groß wie die Erregerfrequenz.

In einer Weiterbildung werden zum Bestimmen des Rotorwinkels nur solche in der Rotorwicklung induzierte Signalanteile verwendet, die von der ersten und der zweiten Erregerwechselspannung bewirkt sind, d.h. bei der Rotorwinkelbestimmung werden die Beiträge der Testwechselspannungen unterdrückt.

In einer Weiterbildung werden Signalanteile, die aufgrund der ersten und der zweiten Testwechselspannung in der Rotorwicklung induziert werden, zum Ermitteln eines Leitungsbruchs, eines Kurzschlusses und/oder eines mechanischen Defekts des Resolvers ausgewertet und/oder zu einem redundanten Bestimmen des Rotorwinkels ausgewertet.

In einer Weiterbildung wird eine Spannung, die in der mindestens einen Rotorwicklung aufgrund der Erregerwechselspannungen und der Testwechselspannungen induziert wird, mittels Korrelation in Signalanteile separiert, die aufgrund der Testwechselspannungen in der Rotorwicklung induziert werden, und in Signalanteile separiert, die aufgrund der Erregerwechselspannungen in der Rotorwicklung induziert werden. Auf diese Weise kann eine Auswertung getrennt nach Signalanteilen erfolgen, d.h. das Bestimmen des Rotorwinkels kann herkömmlich auf Basis nur derjenigen Signalanteile erfolgen, die ausschließlich aufgrund der Erregerwechselspannungen in der Rotorwicklung induziert werden, ohne dass hierfür aufwendige Filter zum Unterdrücken derjenigen insoweit störenden Signalanteile erforderlich sind, die von den Testwechselspannungen herrühren.

Die Vorrichtung zum Überwachen des Bestimmens eines Rotorwinkels einer rotierenden Welle ist zur Durchführung des oben genannten Verfahrens ausgebildet. Der Resolver umfasst weiter: Mittel zum Beaufschlagen der ersten Statorwicklung mit einer ersten, insbesondere sinusförmigen, Erregerwechselspannung mit einer Erregerfrequenz und einer ersten rotorwinkelabhängigen Amplitude, Mittel zum Beaufschlagen der mindestens einen zweiten Statorwicklung mit einer zweiten, insbesondere sinusförmigen, Erregerwechselspannung mit der Erregerfrequenz und einer zweiten rotorwinkelabhängigen Amplitude und Mittel zum Erzeugen der ersten Amplitude und der zweiten Amplitude mittels eines Reglers derart, dass in der mindestens einen Rotorwicklung aufgrund der ersten und der zweiten Erregerwechselspannung in einem stationären Zustand keine Spannung induziert wird, wobei eine Stellgröße des Reglers den Rotorwinkel abbildet. Die Vorrichtung umfasst: Mittel zum Beaufschlagen der ersten Statorwicklung mit einer ersten, insbesondere sinusförmigen, Testwechselspannung mit einer Testfrequenz, die sich von der Erregerfrequenz unterscheidet, Mittel zum Beaufschlagen der mindestens einen zweiten Statorwicklung mit einer zweiten, insbesondere sinusförmigen, Testwechselspannung mit der Testfrequenz, wobei die erste und die zweite Testwechselspannung bzw. deren Amplituden derart rotorwinkelabhängig erzeugt werden, dass in der mindestens einen Rotorwicklung aufgrund der ersten und der zweiten Testwechselspannung dauerhaft eine Wechselspannung induziert wird, sowie weiterhin Mittel zum Auswerten von Signalanteilen, die aufgrund der ersten und der zweiten Testwechselspannung in der Rotorwicklung induziert werden, zum Ermitteln eines Leitungsbruchs, eines Kurzschlusses und/oder eines mechanischen Defekts des Resolvers und/oder zu einem redundanten Bestimmen des Rotorwinkels.

Das System umfasst einen Resolver sowie eine oben genannte Resolver-Überwachungsvorrichtung.

Die Erfindung wird nachfolgend unter Bezugnahme auf die beigefügte Zeichnung beschrieben, die bevorzugte Ausführungsformen der Erfindung zeigt. Hierbei zeigt schematisch:

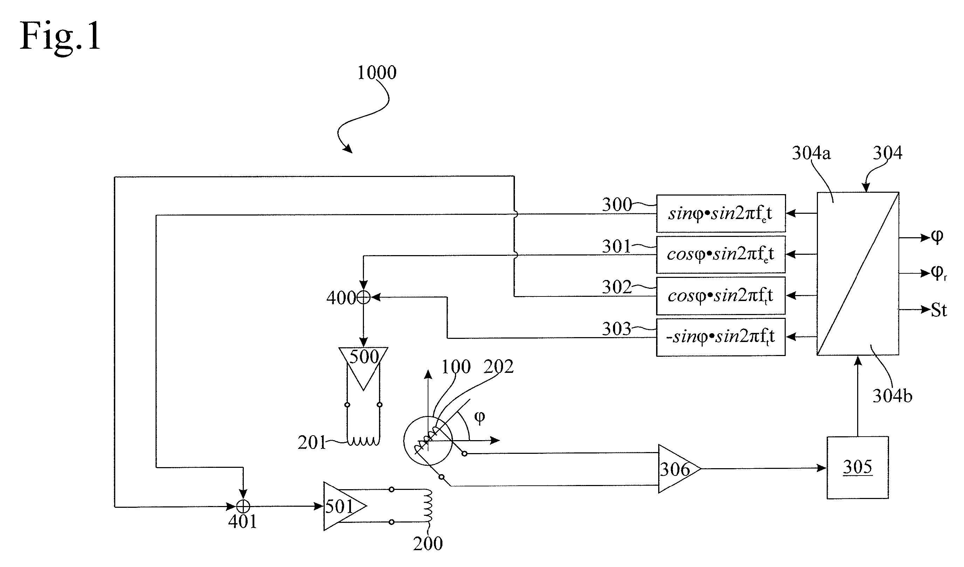

Fig. 1     ein erfindungsgemäßes System zum Überwachen des Bestimmens eines Rotorwinkels einer rotierenden Welle mittels eines Resolvers.

Fig. 1 zeigt ein erfindungsgemäßes System 1000 mit einem Resolver sowie einer Vorrichtung zum Überwachen der ordnungsgemäßen Funktion des Resolvers.

Der Resolver weist eine erste Statorwicklung 200, eine zweite Statorwicklung 201, deren Wicklungsachse zur Wicklungsachse der ersten Statorwicklung um 90° gedreht ist, und eine Rotorwicklung 202 auf, die mit einer rotierenden Welle 100 drehfest verbunden ist. Ein zu bestimmender Rotorwinkel ist mit φ bezeichnet.

Das System bzw. der Resolver umfasst Mittel 300, beispielsweise in Form eines D/A-Wandlers mit nachgeschaltetem Verstärker, zum Beaufschlagen der ersten Statorwicklung 200 mit einer ersten sinusförmigen Erregerwechselspannung $U_{e1} = \sin\varphi \cdot \sin 2\pi f_e t$ mit einer Erregerfrequenz $f_e$ von 4kHz und einer ersten rotorwinkelabhängigen Amplitude $\sin\varphi$, Mittel 301, beispielsweise in Form eines D/A-Wandlers mit nachgeschaltetem Verstärker, zum Beaufschlagen der zweiten Statorwicklung 201 mit einer zweiten sinusförmigen Erregerwechselspannung $U_{e2} = \cos\varphi \cdot \sin 2\pi f_e t$ mit der Erregerfrequenz $f_e$ und einer zweiten rotorwinkelabhängigen Amplitude $\cos\varphi$, und Mittel 304a zum Erzeugen der ersten Amplitude und der zweiten Amplitude mittels eines im Mittel 304a integrierten Reglers derart, dass in der Rotorwicklung 202 aufgrund der ersten und der zweiten Erregerwechselspannung $U_{e1}$ und $U_{e2}$ in einem stationären bzw. eingeschwungenen Zustand keine Spannung induziert wird, wobei eine Stellgröße des Reglers den Rotorwinkel abbildet. Das Mittel 304a sowie der Regler sind in Gestalt eines Mikroprozessors oder eines Signalprozessors 304 und zugehöriger Software verwirklicht. Im Übrigen sei auch auf die DE 38 34 384 A1 verwiesen.

Die Überwachungsvorrichtung umfasst Mittel 302, beispielsweise in Form eines D/A-Wandlers mit nachgeschaltetem Verstärker, zum Beaufschlagen der ersten Statorwicklung 200 mit einer ersten sinusförmigen Testwechsel-

spannung $U_{t1}$ = cos$\varphi$·sin $2\pi f_t t$ mit einer Testfrequenz $f_t$ von 8kHz, Mittel 303, beispielsweise in Form eines D/A-Wandlers mit nachgeschaltetem Verstärker, zum Beaufschlagen der zweiten Statorwicklung 201 mit einer zweiten sinusförmigen Testwechselspannung $U_{t2}$ = - sin $\varphi$·sin $2\pi f_t t$ mit der Testfrequenz $f_t$, wobei die erste und die zweite Testwechselspannung $U_{t1}$ und $U_{t2}$ derart rotorwinkelabhängig, d.h. in Abhängigkeit vom derzeit mittels des Resolvers bestimmten Rotorwinkels, erzeugt werden, dass in der Rotorwicklung 202 dauerhaft eine Wechselspannung induziert wird.

Die von den Mitteln 300 und 302 erzeugten Signale bzw. Spannungen werden in einem Summierglied 401 addiert bzw. überlagert, anschließend mittels eines Verstärkers 501 verstärkt und an die erste Statorwicklung 200 angelegt. Entsprechend werden die von den Mitteln 301 und 303 erzeugten Signale bzw. Spannungen in einem Summierglied 400 addiert bzw. überlagert, anschließend mittels eines Verstärkers 500 verstärkt und an die zweite Statorwicklung 201 angelegt.

Bei den gezeigten Ausführungsformen ist die getrennte analoge Erzeugung von Erregerwechselspannungen und Testwechselspannungen sowie deren Summierung mittels getrennter D/A-Wandler und analoger Summierer dargestellt. Es versteht sich, dass die Summierung von Erregerwechselspannungen und Testwechselspannungen auch bereits in der digitalen Signalerzeugung erfolgen kann.

Die in der Rotorwicklung 202 induzierte Wechselspannung wird zunächst durch einen Verstärker 306 verstärkt, durch einen A/D-Wandler 305 digitalisiert und im Mikro- bzw. Signalprozessor 304 ausgewertet. Hierzu wird die in der Rotorwicklung 202 induzierte, verstärkte und anschließend digitalisierte Wechselspannung zunächst mittels Korrelation in solche Signalanteile separiert, die aufgrund der Erregerwechselspannungen in der Rotorwicklung 202 induziert werden, und in solche Signalanteile separiert, die aufgrund der Testwechselspannungen in der Rotorwicklung 202 induziert werden.

Um die Amplituden und Vorzeichen dieser Signalanteile separat voneinander zu bestimmen, wird die Rotorwicklungsspannung mit einer Frequenz von 64kHz abgetastet. Es entstehen damit für eine 4kHz Periode 16 Abtastwerte V(n), n = 0..15.

Zum Bestimmen der Amplitude wird folgende Korrelation durchgeführt:

$$A = \text{Summe\_n=0..15 } (V(n) * D\_x(n)).$$

Um diejenigen Signalanteile zu berechnen, die von den Erregerwechselspannungen $U_{e1}$ und $U_{e2}$ bewirkt werden, wird eine Demodulation für die Erregerfrequenz mit 4kHz durchgeführt. D_4(n, n=0..15) ergibt sich zu D_4(n) = sin(360°/16 * n). Die derart berechneten Signalanteile dienen als Eingangssignal für die Mittel 304a bzw. den Regler, der bewirkt, dass in der Rotorwicklung 202 aufgrund der ersten und der zweiten Erregerwechselspannung $U_{e1}$ und $U_{e2}$ in einem stationären bzw. eingeschwungenen Zustand keine Spannung induziert wird. Die Stellgröße des Reglers bildet, wie bereits oben ausgeführt, den Rotorwinkel $\varphi$ ab und wird an einem zugehörigen Ausgang des Mikroprozessors 304 als Größe $\varphi$ ausgegeben.

Um diejenigen Signalanteile zu berechnen, die von den Testwechselspannungen $U_{t1}$ und $U_{t2}$ bewirkt werden, wird eine Demodulation für die Testfrequenz mit 8kHz D_8(n) = sin(360°/16 * 2n) ausgeführt. Die derart berechneten Signalanteile dienen als Eingangssignal für die Auswertemittel 304b, die diesen Signalanteil zum Ermitteln eines Leitungsbruchs, eines Kurzschlusses und/oder eines mechanischen Defekts des Resolvers und/oder zu einem redundanten Bestimmen des Rotorwinkels $\varphi$ auswerten. Die Auswertemittel 304b bzw. der Mikroprozessor 304 geben/gibt an zugehörigen Ausgängen den redundant bestimmten Rotorwinkel als Größe $\varphi_r$ sowie ein Statussignal St aus, welches einen Leitungsbruch, einen Kurzschlusses bzw. einen mechanischen Defekt des Resolvers kodiert.

Um einen Defekt des Resolvers zu detektieren, wird in den Auswertemitteln 304b überprüft, ob diejenigen Signalanteile in der Rotorwicklung 202, die von den Testwechselspannungen $U_{t1}$ und $U_{t2}$ bewirkt werden, von denen im Normalzustand abweichen. Ist dies der Fall, kann auf einen Defekt des Resolvers geschlossen werden.

Zum redundanten Bestimmen des Rotorwinkels kann beispielsweise eine Phasenverschiebung zwischen den Testwechselspannungen und denjenigen Signalanteilen in der Rotorwicklung ausgewertet werden, die von den Testwechselspannungen $U_{t1}$ und $U_{t2}$ bewirkt werden.

Bei den gezeigten Ausführungsformen umfasst der Resolver zwei Statorwicklungen und eine Rotorwicklung. Es versteht sich, dass die Erfindung auch für Resolver anwendbar ist, die beispielsweise drei oder mehr Statorwicklungen und/oder 2 oder mehr Rotorwicklungen aufweisen. Die Erreger- und Testfrequenzen können selbstverständlich auch andere als die genannten Werte aufweisen.

Es versteht sich auch weiterhin, dass die Anordnung von Stator- und Rotorwicklung vertauscht sein kann, also eine (Test-)Signaleinspeisung im Rotor erfolgen kann und eine im Stator induzierte Spannung abgenommen bzw. gemessen wird.

Die gezeigten Ausführungsformen ermöglichen eine zuverlässige und kostengünstig implementierbare Resolver-Überwachung und sind leicht in herkömmliche Systeme zur Winkelbestimmung mit Resolver integrierbar.

**Patentansprüche**

1.  Verfahren zum Überwachen des Bestimmens eines Rotorwinkels ($\varphi$) einer rotierenden Welle (100) mittels eines Resolvers,

    - wobei der Resolver umfasst:

        - eine erste Statorwicklung (200),
        - mindestens eine zweite Statorwicklung (201), deren Wicklungsachse zur Wicklungsachse der ersten Statorwicklung um einen vorbestimmten Winkel gedreht ist, und
        - mindestens eine Rotorwicklung (202), die mit der rotierenden Welle drehfest verbunden ist,

    - wobei zum Bestimmen des Rotorwinkels folgende Schritte durchgeführt werden:

        - Beaufschlagen der ersten Statorwicklung mit einer ersten, insbesondere sinusförmigen, Erregerwechselspannung ($U_{e1}$) mit einer Erregerfrequenz ($f_e$) und einer ersten Amplitude (sin $\varphi$),
        - Beaufschlagen der mindestens einen zweiten Statorwicklung mit einer zweiten, insbesondere sinusförmigen, Erregerwechselspannung ($U_{e2}$) mit der Erregerfrequenz und einer zweiten Amplitude (cos$\varphi$), und
        - Erzeugen der ersten Amplitude und der zweiten Amplitude mittels eines Reglers derart, dass in der mindestens einen Rotorwicklung aufgrund der ersten und der zweiten Erregerwechselspannung in einem stationären Zustand keine Spannung induziert wird, wobei eine Stellgröße des Reglers den Rotorwinkel abbildet,

    - wobei zum Überwachen des Bestimmens des Rotorwinkels folgende Schritte durchgeführt werden:

        - Beaufschlagen der ersten Statorwicklung mit einer ersten, insbesondere sinusförmigen, Testwechselspannung ($U_{t1}$) mit einer Testfrequenz ($f_t$), die sich von der Erregerfrequenz unterscheidet, und

        - Beaufschlagen der mindestens einen zweiten Statorwicklung mit einer zweiten, insbesondere sinusförmigen, Testwechselspannung ($U_{t2}$) mit der Testfrequenz, wobei die erste und die zweite Testwechselspannung in Abhängigkeit von dem Rotorwinkel derart erzeugt werden, dass ein aufgrund der ersten und der zweiten Testwechselspannung erzeugtes magnetisches Wechselfeld im Wesentlichen parallel zur Wicklungsachse der Rotorwicklung verläuft, so dass in der mindestens einen Rotorwicklung aufgrund der ersten und der zweiten Testwechselspannung dauerhaft eine Wechselspannung induziert wird.

2.  Verfahren nach Anspruch 1, **dadurch gekennzeichnet, dass**

    - die Testfrequenz darstellbar ist als ft = k * fe, wobei ft die Testfrequenz bezeichnet, fe die Erregerfrequenz bezeichnet und k eine rationale Zahl größer als Null ist.

3.  Verfahren nach Anspruch 1 oder 2, **dadurch gekennzeichnet, dass** zum Bestimmen des Rotorwinkels nur solche in der Rotorwicklung induzierte Signalanteile verwendet werden, die von der ersten und der zweiten Erregerwechselspannung bewirkt sind.

4.  Verfahren nach einem der vorhergehenden Ansprüche, **dadurch gekennzeichnet, dass**

    - Signalanteile, die aufgrund der ersten und der zweiten Testwechselspannung in der Rotorwicklung induziert werden, zum Ermitteln eines Leitungsbruchs, eines Kurzschlusses und/oder eines mechanischen Defekts des Resolvers ausgewertet werden.

5.  Verfahren nach einem der vorhergehenden Ansprüche, **dadurch gekennzeichnet, dass**

    - Signalanteile, die aufgrund der ersten und der zweiten Testwechselspannung in der Rotorwicklung induziert werden, zu einem redundanten Bestimmen des Rotorwinkels ausgewertet werden.

6.  Verfahren nach einem der vorhergehenden Ansprüche, **dadurch gekennzeichnet, dass** eine in der mindestens einen Rotorwicklung aufgrund der ersten und der zweiten Erregerwechselspannung und der ersten und der zweiten Testwechselspannung induzierte Spannung mittels Korrelation in Signalanteile, die aufgrund der ersten und der zweiten Testwechselspannung in der Rotorwicklung induziert werden, und in Signalanteile, die aufgrund der ersten und der zweiten Erregerwechselspannung in der Rotorwicklung induziert werden, separiert wird.

7. Vorrichtung zum Überwachen des Bestimmens eines Rotorwinkels einer rotierenden Welle (100) mittels eines Resolvers,

- wobei der Resolver umfasst:

- eine erste Statorwicklung (200),
- mindestens eine zweite Statorwicklung (201), deren Wicklungsachse zur Wicklungsachse der ersten Statorwicklung um einen vorbestimmten Winkel gedreht ist, und
- mindestens eine Rotorwicklung (202), die mit der rotierenden Welle drehfest verbunden ist,
- Mittel (300) zum Beaufschlagen der ersten Statorwicklung mit einer ersten, insbesondere sinusförmigen, Erregerwechselspannung ($U_{e1}$) mit einer Erregerfrequenz ($f_e$) und einer ersten Amplitude ($\sin\varphi$),
- Mittel (301) zum Beaufschlagen der mindestens einen zweiten Statorwicklung mit einer zweiten, insbesondere sinusförmigen, Erregerwechselspannung ($U_{e2}$) mit der Erregerfrequenz und einer zweiten Amplitude ($\cos \varphi$), und

- Mittel (304a) zum Erzeugen der ersten Amplitude und der zweiten Amplitude mittels eines Reglers derart, dass in der mindestens einen Rotorwicklung aufgrund der ersten und der zweiten Erregerwechselspannung in einem stationären Zustand keine Spannung induziert wird, wobei eine Stellgröße des Reglers den Rotorwinkel abbildet,

wobei die Vorrichtung umfasst:

- Mittel (302) zum Beaufschlagen der ersten Statorwicklung mit einer ersten, insbesondere sinusförmigen, Testwechselspannung ($U_{t1}$) mit einer Testfrequenz ($f_t$), die sich von der Erregerfrequenz unterscheidet,
- Mittel (303) zum Beaufschlagen der mindestens einen zweiten Statorwicklung mit einer zweiten, insbesondere sinusförmigen, Testwechselspannung ($U_{t2}$) mit der Testfrequenz, wobei die erste und die zweite Testwechselspannung in Abhängigkeit von dem Rotorwinkel derart erzeugt werden, dass ein aufgrund der ersten und der zweiten Testwechselspannung erzeugtes magnetisches Wechselfeld im Wesentlichen parallel zur Wicklungsachse der Rotorwicklung verläuft, so dass in der mindestens einen Rotorwicklung aufgrund der ersten und der zweiten Testwechselspannung dauerhaft eine Wechselspannung induziert wird, und
- Mittel (304b) zum Auswerten von Signalanteilen, die aufgrund der ersten und der zweiten Testwechselspannung in der Rotorwicklung induziert werden, zum Ermitteln eines Leitungsbruchs, eines Kurzschlusses und/oder eines mechanischen Defekts des Resolvers und/oder zum redundanten Bestimmen des Rotorwinkels.

8. System, umfassend:

- einen Resolver, umfassend

- mindestens eine erste Statorwicklung (200),
- mindestens eine zweite Statorwicklung (201), deren Wicklungsachse zur Wicklungsachse der mindestens einen ersten Statorwicklung in einem vorbestimmten Winkel steht, und
- mindestens eine Rotorwicklung (202), die mit der rotierenden Welle drehfest verbunden ist, wobei

- der Resolver dazu ausgebildet ist, den Rotorwinkel mittels Rotorerregung oder Statorerregung zu bestimmen, und

- eine Vorrichtung nach Anspruch 7.


**Claims**

1. A method for monitoring the determination of a rotor angle ($\varphi$) of a rotating shaft (100) by means of a resolver,

- wherein the resolver comprises:

- a first stator winding (200),
- at least one second stator winding (201), whose winding axis is rotated through a predetermined angle with respect to the winding axis of the first stator winding, and
- at least one rotor winding (202), which is connected to the rotating shaft such that they rotate together,

- wherein the following steps are carried out for determination of the rotor angle:

- a first, in particular sinusoidal, exciter AC voltage ($U_{e1}$) at an exciter frequency ($f_e$) and with a first amplitude (sin$\varphi$) is applied to the first stator winding,
- a second, in particular sinusoidal, exciter AC voltage ($U_{e2}$) at the exciter frequency and with a second amplitude (cos$\varphi$) is applied to the at least one second stator winding, and
- the first amplitude and the second amplitude are produced by means of a regulator such that no voltage is induced in the at least one rotor winding as a result of the first and the second exciter AC voltages in a stationary state, wherein a manipulated variable of the regulator maps the rotor angle,

- wherein the following steps are carried out for monitoring the determination of the rotor angle:

- a first, in particular sinusoidal, test AC voltage ($U_{t1}$) at a test frequency ($f_t$) which is not the same as the exciter frequency is applied to the first stator winding, and
- a second, in particular sinusoidal, test AC voltage ($U_{t2}$) at the test frequency is applied to the at least one second stator winding, wherein the first and the second test AC voltages are produced in response to the rotor angle such that a magnetic alternating field which is produced as a result of the first and the second test AC voltages runs essentially parallel to the winding axis of the rotor winding, so that an AC voltage is permanently induced in the at least one rotor winding as a result of the first and the second test AC voltages.

2. The method according to claim 1, **characterized in that**

- the test frequency can be represented as ft = k * fe, where ft denotes the test frequency, fe denotes the exciter frequency and k is a rational number greater than zero.

3. The method according to claim 1 or 2, **characterized in that** only those signal components which are induced in the rotor winding and are produced by the first and the second exciter AC voltages are used for determination of the rotor angle.

4. The method according to any one of the preceding claims, **characterized in that**

- signal components which are induced in the rotor winding as a result of the first and the second test AC voltages are evaluated in order to determine a line break, a short circuit and/or a mechanical defect in the resolver.

5. The method according to any one of the preceding claims, **characterized in that**

- signal components which are induced in the rotor winding as a result of the first and the second test AC voltages are evaluated for redundant determination of the rotor angle.

6. The method according to any one of the preceding claims, **characterized in that** a voltage which is induced in the at least one rotor winding as a result of the first and the second exciter AC voltages and the first and the second test AC voltages is separated by means of correlation into signal components which are induced in the rotor winding as a result of the first and the second test AC voltages, and into signal components which are induced in the rotor winding as a result of the first and the second exciter AC voltages.

7. A device for monitoring the determination of a rotor angle of a rotating shaft (100) by means of a resolver,

- wherein the resolver comprises:

- a first stator winding (200),
- at least one second stator winding (201), whose winding axis is rotated through a predetermined angle with respect to the winding axis of the first stator winding,
- at least one rotor winding (202), which is connected to the rotating shaft such that they rotate together,

- means (300) for application of a first, in particular sinusoidal, exciter AC voltage ($U_{e1}$) at an exciter frequency ($f_e$) and with a first amplitude ($\sin\varphi$) to the first stator winding,
- means (301) for application of a second, in particular sinusoidal, exciter AC voltage ($U_{e2}$) at the exciter frequency and with a second amplitude ($\cos\varphi$) to the at least one second stator winding, and
- means (304a) for production of the first amplitude and of the second amplitude by means of a regulator such that no voltage is induced in the at least one rotor winding as a result of the first and the second exciter AC voltages in a stationary state, wherein a manipulated variable of the regulator maps the rotor angle,

wherein the device comprises:

- means (302) for application of a first, in particular sinusoidal, test AC voltage ($U_{t1}$) at a test frequency ($f_t$) which is not the same as the exciter frequency, to the first stator winding,
- means (303) for application of a second, in particular sinusoidal, test AC voltage ($U_{t2}$) at the test frequency to the at least one second stator winding, wherein the first and the second test AC voltages are produced in response to the rotor angle such that a magnetic alternating field which is produced as a result of the first and the second test AC voltages runs essentially parallel to the winding axis of the rotor winding, so that an AC voltage is permanently induced in the at least one rotor winding as a result of the first and the second test AC voltages, and
- means (304b) for evaluation of signal components which are induced in the rotor winding as a result of the first and the second test AC voltages, in order to determine a line break, a short circuit and/or a mechanical defect in the resolver, and/or for redundant determination of the rotor angle.

8. A system, comprising:

- a resolver, comprising

- at least one first stator winding (200),
- at least one second stator winding (201), whose winding axis is at a predetermined angle with respect to the winding axis of the at least one first stator winding, and
- at least one rotor winding (202), which is connected to the rotating shaft such that they rotate together, wherein

- the resolver is designed to determine the rotor angle by means of rotor excitation or stator excitation, and

- a device according to claim 7.

**Revendications**

1. Procédé de surveillance de la détermination d'un angle de rotor ($\varphi$) d'un arbre (100) en rotation au moyen d'un résolveur,

- le résolveur comprenant :

- un premier enroulement de stator (200),
- au moins un deuxième enroulement de stator (201) dont l'axe d'enroulement est tourné d'un angle prédéfini par rapport à l'axe d'enroulement du premier enroulement de stator, et
- au moins un enroulement de rotor (202) qui est relié solidaire en rotation avec l'arbre en rotation,
- les étapes suivantes étant exécutées pour déterminer l'angle du rotor :

- alimentation du premier enroulement de stator avec une première tension alternative d'excitation ($U_{e1}$), notamment sinusoïdale, ayant une fréquence d'excitation ($f_e$) et une première amplitude ($\sin\varphi$),
- alimentation de l'au moins un deuxième enroulement de stator avec une deuxième tension alternative d'excitation ($U_{e2}$), notamment sinusoïdale, ayant la fréquence d'excitation et une deuxième amplitude ($\cos\varphi$), et
- génération de la première amplitude et de la deuxième amplitude au moyen d'un régulateur de telle sorte qu'aucune tension ne soit induite dans l'au moins un enroulement de rotor dans un état fixe du fait de la première et de la deuxième tension alternative d'excitation, une grandeur de commande du régulateur représentant l'angle de rotor,
- les étapes suivantes étant exécutées pour surveiller la détermination de l'angle de rotor :
- alimentation du premier enroulement de stator avec une première tension alternative de test ($U_{t1}$), notamment sinusoïdale, ayant une fréquence de test ($f_t$) qui est différente de la fréquence d'excitation, et
- alimentation de l'au moins un deuxième enroulement de stator avec une deuxième tension alternative de test ($U_{t2}$), notamment sinusoïdale, ayant la fréquence de test, la première et la deuxième tension alternative de test étant générées en fonction de l'angle de rotor de telle sorte qu'un champ magnétique alternatif généré du fait de la première et de la deuxième tension alternative de test s'étend sensiblement en parallèle à l'axe d'enroulement de l'enroulement de rotor, de sorte qu'une tension alternative est induite de manière permanente dans l'au moins un enroulement de rotor du fait de la première et de la deuxième tension alternative de test.

2. Procédé selon la revendication 1, **caractérisé en ce que**

- la fréquence de test peut être représentée sous la forme ft = k*fe, où ft désigne la fréquence de test, fe désigne la fréquence d'excitation et k est un nombre rationnel supérieur à zéro.

3. Procédé selon la revendication 1 ou 2, **caractérisé en ce que** pour la détermination de l'angle de rotor, seules sont utilisées les composantes de signal induites dans l'enroulement de rotor qui sont provoquées par la première et la deuxième tension alternative d'excitation.

4. Procédé selon l'une des revendications précédentes, **caractérisé en ce que**

- les composantes de signal qui sont induites dans l'enroulement de rotor du fait de la première et de la deuxième tension alternative de test sont interprétées en vue de déterminer une rupture de ligne, un court-circuit et/ou un défaut mécanique du résolveur.

5. Procédé selon l'une des revendications précédentes, **caractérisé en ce que**

- les composantes de signal qui sont induites dans l'enroulement de rotor du fait de la première et de la deuxième tension alternative de test sont interprétées en vue d'une détermination redondante de l'angle de rotor.

6. Procédé selon l'une des revendications précédentes, **caractérisé en ce qu'**une tension induite dans l'au moins un enroulement de rotor du fait de la première et de la deuxième tension alternative d'excitation et de la première et de la deuxième tension alternative de test est séparée par corrélation en composantes de signal qui sont induites dans l'enroulement de rotor du fait de la première et de la deuxième tension alternative de test et en composantes de signal qui sont induites dans l'enroulement de rotor du fait de la première et de la deuxième tension alternative d'excitation.

7. Dispositif de surveillance de la détermination d'un angle de rotor d'un arbre (100) en rotation au moyen d'un résolveur,

- le résolveur comprenant :

- un premier enroulement de stator (200),
- au moins un deuxième enroulement de stator (201) dont l'axe d'enroulement est tourné d'un angle prédéfini par rapport à l'axe d'enroulement du premier enroulement de stator, et
- au moins un enroulement de rotor (202) qui est relié solidaire en rotation avec l'arbre en rotation,
- des moyens (300) destinés à alimenter le premier enroulement de stator avec une première tension alternative d'excitation ($U_{e1}$), notamment sinusoïdale, ayant une fréquence d'excitation ($f_e$) et une première amplitude ($\sin\varphi$),
- des moyens (301) destinés à alimenter l'au moins un deuxième enroulement de stator avec une deuxième tension alternative d'excitation ($U_{e2}$), notamment sinusoïdale, ayant la fréquence d'excitation et une deuxième amplitude ($\cos\varphi$), et
- des moyens (304a) destinés à générer la première amplitude et la deuxième amplitude au moyen d'un régulateur de telle sorte qu'aucune tension ne soit induite dans l'au moins un enroulement de rotor dans un état fixe du fait de la première et de la deuxième tension alternative d'excitation, une grandeur de commande du régulateur représentant l'angle de rotor,

le dispositif comprenant :

- des moyens (302) destinés à alimenter le premier enroulement de stator avec une première tension alternative de test ($U_{t1}$), notamment sinusoïdale, ayant une fréquence de test ($f_t$) qui est différente de la fréquence d'excitation, et

- des moyens (303) destinés à alimenter l'au moins un deuxième enroulement de stator avec une deuxième tension alternative de test ($U_{t2}$), notamment sinusoïdale, ayant la fréquence de test, la première et la deuxième tension alternative de test étant générées en fonction de l'angle de rotor de telle sorte qu'un champ magnétique alternatif généré du fait de la première et de la deuxième tension alternative de test s'étend sensiblement en parallèle à l'axe d'enroulement de l'enroulement de rotor, de sorte qu'une tension alternative est induite de manière permanente dans l'au moins un enroulement de rotor du fait de la première et de la deuxième tension alternative de test, et

- des moyens (304b) destinés à interpréter les composantes de signal qui sont induites dans l'enroulement de rotor du fait de la première et de la deuxième tension alternative de test en vue de déterminer une rupture de ligne, un court-circuit et/ou un défaut mécanique du résolveur et/ou en vue de déterminer l'angle de rotor de manière redondante.

**8.** Système comprenant :

- un résolveur comprenant :

  - au moins un premier enroulement de stator (200),
  - au moins un deuxième enroulement de stator (201) dont l'axe d'enroulement se trouve à un angle prédéfini par rapport à l'axe d'enroulement de l'au moins un premier enroulement de stator, et
  - au moins un enroulement de rotor (202) qui est relié solidaire en rotation avec l'arbre en rotation,
  - le résolveur étant configuré pour déterminer l'angle de rotor au moyen de l'excitation du rotor ou de l'excitation du stator, et
  - un dispositif selon la revendication 7.

# Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2007163287 A
- EP 2078933 A2

- DE 3834384 A1